Europäisches Patentamt

European Patent Office

Office européen des brevets

(19)

(11) Veröffentlichungsnummer: **0 156 144**
**A2**

(12) **EUROPÄISCHE PATENTANMELDUNG**

(21) Anmeldenummer: **85101517.2**

(22) Anmeldetag: **13.02.85**

(51) Int. Cl.⁴: **B 03 B 9/06**

(30) Priorität **24.03.84 DE 3410961**

(43) Veröffentlichungstag der Anmeldung:
**02.10.85 Patentblatt 85/40**

(84) Benannte Vertragsstaaten:
**AT BE CH DE FR GB IT LI LU NL SE**

(71) Anmelder: **Firma AMBERGER KAOLINWERKE GMBH**
**Georg Schiffer Strasse 70**
**D-8452 Hirschau(DE)**

(72) Erfinder: **Donhauser, Friedrich, Dipl.-Ing.**
**Kolumbusstrasse 66**
**D-8450 Amberg(DE)**

(72) Erfinder: **Ropertz, Guido, Dr. Ing.**
**Bergauffahrt 4**
**D-8450 Amberg(DE)**

(74) Vertreter: **Richter, Bernhard, Dipl.-Ing.**
**Beethovenstrasse 10**
**D-8500 Nürnberg 20(DE)**

(54) Verfahren zur Trennung metallischer Anteile von nichtmetallischen Anteilen eines entsprechenden Gemenges, sowie dazugehörige Anordnung.

(57) Die Erfindung betrifft zunächst ein Verfahren zur Trennung metallischer Anteile von nichtmetallischen Anteilen eines Gemenges (insbesondere sogenannter Kabelschrott und Elektronikschrott). Es sollen sämtliche Fraktionen des Abfalles der Rückgewinnung zugängig gemacht werden Hierzu wird verfahrensmäßig eine Vorfraktionierung in Form einer Sedimentation oder Zentrifugalsedimentation vorgesehen. Der schwere Austrag dieser Vorfraktionierung wird mittels eines Schichtströmungsverfahrens weiter fraktioniert und zwar in eine schwere metallische Fraktion und eine leichte nichtmetallische Fraktion. Die Erfindung betrifft ferner eine Anordnung zur Durchführung dieses Verfahrens und zwar mit einer der Zentrifugalsedimentation dienenden Hydrozyklonstufe, deren Unterlauf mit dem Eingang einer Schichtströmungsstufe verbunden ist.

Fig. 1

EP 0 156 144 A2

"Verfahren zur Trennung metallischer Anteile von nichtmetallischen Anteilen eines entsprechenden Gemenges,
sowie dazugehörige Anordnung."

Die Erfindung betrifft zunächst ein Verfahren gemäß dem
Oberbegriff des Anspruches 1. Sowohl aus Gründen des Umweltschutzes und der Vermeidung von großen Abfalldeponien,
aber auch zur Wiedergewinnung von sonst verlorengegangenen
Materialien wird die Rückgewinnung (sogenanntes Recycling)
von Bestandteilen von Abfällen angestrebt. Hierzu kennt man
für den Abfall der Elektroindustrie, insbesondere an elektrischen Kabeln, sowie der Elektronikindustrie - und dies
sind die bevorzugten Anwendungsgebiete der vorliegenden
Erfindung - bereits Verfahren, bei denen die Kabel, Geräte,
Schaltungsplatinen usw. mechanisch zerkleinert (geshreddert)
und danach im Luftsichtverfahren in die metallischen und
die nichtmetallischen Teile getrennt werden. Hauptsächlich
fällt hierbei als Metall Kupfer an, jedoch sind auch andere
Metalle, wie Platin, Gold, Palladium, Zinn und Silber, wenn
auch in kleineren Anteilen, darin enthalten. Nachteilig ist
bei diesem Verfahren, daß die entstehende "Abfall"-Fraktion,
also im wesentlichen die nichtmetallischen Bestandteile,
wie leichte und schwere Kunststoffe und Kunststoffabfälle und Textilfasern noch etwa 3 - 15 Gewichts % an nicht separiertem Metall enthalten und daß außerdem dieser gesamte Abfall unverwertbar auf eine Halde deponiert werden muß. Bei einigen Kabelschrottverarbeitern beträgt die Menge dieser Halde schon 80 000 bis 100 000 t. Dies stellt eine erhebliche finanzielle Belastung dar. Hinzu kommt, daß die im Abfall enthaltenen Materialien, also sowohl Kunststoffe, als auch die vorgenannten Metallanteile nicht wiederverwertet werden können. Auch dies stellt einen ganz erheblichen finanziellen Verlust dar.

Aus der DE-PS 25 55 093 ist die Verwendung eines Hydrozyklons bekannt, der in seinem Unterlauf eine möglichst reine Metallfraktion abscheidet. Die Verfahrensweise und die zugehörige Anordnung der Erfindung sind darin nicht beschrieben. Das gleiche gilt für die DE-AS 22 20 132, die sich nur mit der Abscheidung eines Sinters (Eisenoxyd) von Wasser befaßt und zwar zum Teil durch Schwerkraftsedimentation und zum Teil auch durch Zentrifugaltrennung. Die DE-OS 21 39 350 befaßt sich mit der Aufbereitung von Kabelabfällen, wobei dieses Gemenge einer Läutertrommel zugeführt und dort chemisch behandelt wird. Danach werden die einzelnen Bestandteile naßmechanisch ihrer Wichte nach voneinander getrennt. Abgesehen von den sehr langen Einwirkzeiten (ca. 45 Minuten) der Reagenzien in der Läuterkammer zeigt auch diese Vorveröffentlichung nicht die Erfindung, sondern nur das Element des Schüttelherdes für sich zwecks Trennung einer metallischen Fraktion von einer nichtmetallischen Fraktion. Trocknung und Sichtung von leichten Materialien (Papier oder dergleichen) mittels Heißluft sind aus der DE-OS 28 04 548 für sich bekannt, nicht aber im Zusammenhang mit Verfahren und Anordnung gemäß dieser Erfindung.

Die Aufgabe der Erfindung besteht demgegenüber darin, sämtliche Fraktionen des Abfalles der eingangs genannten Verschrottung oder Feinstzerkleinerung der Rückgewinnung zugängig zu machen, einschließlich der Rückgewinnung des darin enthaltenen Metallanteiles.

Der Lösung dieser Aufgabe dienen zunächst, ausgehend vom Oberbegriff des Anspruches 1, die Merkmal des Kennzeichens des Anspruches 1. Im Gegensatz zum erläuterten Stand der Technik, der entweder nur eine Sedimentation oder nur eine Schichtströmung vorsieht, hat sich mit der Erfindung gezeigt, daß die Kombination einer Sedimentation für die Vorfraktionierung mit einem nachgeschalteten Schichtströmungsverfahren für die weitere Fraktionierung zu dem gewünschten Ergebnis führt. In der ersten Stufe, nämlich der Sedimentation, insbesondere einer Zentrifugalsedimentation wird eine Vorsortierung des im Hinblick auf spezifisches Gewicht und Partikelform sehr komplexen Gemenges bzw. Gemisches erreicht. Gröbere und schwerere Partikel, in denen sich aber auch noch Reste von leichteren Partikeln, bzw. Feinstoffe befinden, werden dann der zweiten Verfahrensstufe, nämlich dem Schichtströmungsverfahren zugeführt und dort nochmals fraktioniert (separiert). Man erhält hiermit ein Konzentrat der enthaltenen Metalle (z.B. Gold, Silber, Kupfer, Zinn) mit hohem Reinheitsgrad, das einer wirtschaftlichen Rückgewinnung der einzelnen Metallkomponenten durch eine Raffinierie bzw. Schmelzung zugeführt werden kann. Der Ausgang an leichtem Material sowohl in der ersten Stufe der Sedimentation, bzw. Zentrifugalsedimentation als auch der zweiten Stufe des Schichtströmungsverfahrens wird je nach Bestandteilen entweder weiter verwertet (ggfls. unter weiterer Separierung) und/oder verbrannt und/oder auf Halde deponiert. Auch im letztgenannten Fall ist aber zumindest die Rückgewinnung der metallischen Anteile und ggfls. auch Gewinnung oder Verbrennung anderer Bestandteile gegeben und im Hinblick auf den eingangs erläuterten Stand der Technik von Vorteil.

Im erläuterten bevorzugten Anwendungsgebiet der Erfindung sind prinzipiell zwei Bereiche zu unterscheiden. Der erste Bereich ist die sogenannte Kabelverschrottung, bei der Kabel, bestehend aus Metallseelen (Kupferseele) und isolierender Umhüllung kleingehackt und im erläuterten Luftsichtverfahren in metallische Anteile und den Abfall getrennt werden. Dieser Abfall, der etwa noch 3 bis 10 % Metallteile enthält, wird im folgenden der Einfachheit halber "Kabelschrott" genannt. Er enthält außerdem Polyolefine, Polyvinylchlorid, Gummi, bzw. gummielastische Stoffe und Faserstoffe (meist Asbest oder Baumwolle). Hiervon sind die Polyolefine, Gummi bzw. gummielastische Stoffe und Faserstoffe für die Rückgewinnung interessant, z. T. auch für die Energiegewinnung durch ihre Verbrennung. Die Polyvinylchloride müssen extra abgesondert werden, da sie beim Verbrennen Chlorgas entwickeln würden. Aus dieser Rest-Fraktion kann durch einen weiteren Aufbereitungsschritt reines Polyvinylchlorid gewonnen und dem Recycling zugeführt werden. Der zweite Bereich ist die Gewinnung von Wertmetallkomponenten aus sogenanntem elektronischen Abfall. Hierunter versteht man den Abfall, der nach der Feinstzerkleinerung und Luftsichtung von elektronischen Teilen und Apparaten nach der Vorab-Trennung der Metallteile übrig bleibt. Solche elektronischen Teile und Apparate können sein: Fernseher, Radioapparate, Telefonapparate, gedruckte Schaltungen, Platinen, Schaltschränke und dergleichen mehr. Ein großer Teil dieses Abfalls fällt als sogenannter Filterstaub aus der Luftsichtung an. Zur Vereinfachung wird hierfür der Begriff des "elektronischen Abfalls" verwendet. Dieser elektronische Abfall kann ebenso wie der sogenannte Kabelschrott nicht unmittelbar einer Raffinerie, d.h.

0156144

Schmelze zugeführt werden und mußte deswegen bisher ebenfalls auf Halde deponiert werden. In ihm sind durchschnittlich sogar 10 bis 15 Gew. % Wertmetalle (z. B. Kupfer, Silber, Gold und Zinn) enthalten. Die Erfindung ermöglicht die Verarbeitung sowohl von "Kabelschrott" als auch von "elektronischem Abfall" gemäß der Erfindung. Die Unteransprüche 2 bis 6 zeigen hierzu vorteilhafte Verfahrensmaßnahmen.

Weiter ist es die Aufgabe der Erfindung, eine zur Durchführung des erfindungsgemäßen Verfahrens geeignete und praktikable, sowie wirtschaftliche Anordnung zu schaffen. Hierzu sind zunächst die Merkmale des Anspruches 7 vorgesehen. Statt der dort vorgesehenen Ausdrücke Hydrozyklonstufe und Schichtströmungsstufe wird nachstehend zum Teil auch zur Vereinfachung nur noch von einem Hydrozyklon bzw dem entsprechenden der Schichtströmung dienenden Bauteil gesprochen. Hydrozyklone haben sich für die Zentrifugalsedimentation und Abtrennung in einen Überlauf der leichten Bestandteile und einen Unterlauf der schweren Bestandteile besonders bewährt.

Eine bevorzugte Ausgestaltung der Schichtströmung ist Gegenstand des Anspruches 9. Es hat sich gezeigt, daß die Kombination, d.h. Hintereinanderschaltung zweier der Schichtströmung dienenden Geräte, nämlich eines Wendelscheiders mit einem Schüttelherd die metallischen Bestandteile in einem sehr großen Reinheitsgrad abscheidet.

Insbesondere hat sich für das Erreichen des Zieles der Erfindung die Kombination eines Hydrozyklons mit nachgeschaltetem Wendelabscheider und diesem nachgeschalteten Schüttelherd als vorteilhaft gezeigt.

Weitere Vorteile und Merkmale der Erfindung sind den weiteren Unteransprüchen, sowie der nachfolgenden Beschreibung und zugehörigen, im wesentlichen rein schematischen Zeichnung von erfindungsgemäßen Ausführungsmöglichkeiten zu entnehmen. In der Zeichnung zeigt:

Fig. 1: eine sogenannte Verfahrens-Stammbaum-Zeichnung,

Fig. 2: in einer Teilansicht eine besondere Ausgestaltungsmöglichkeit des Schüttelherdes und seiner Zu- und Ableitungen.

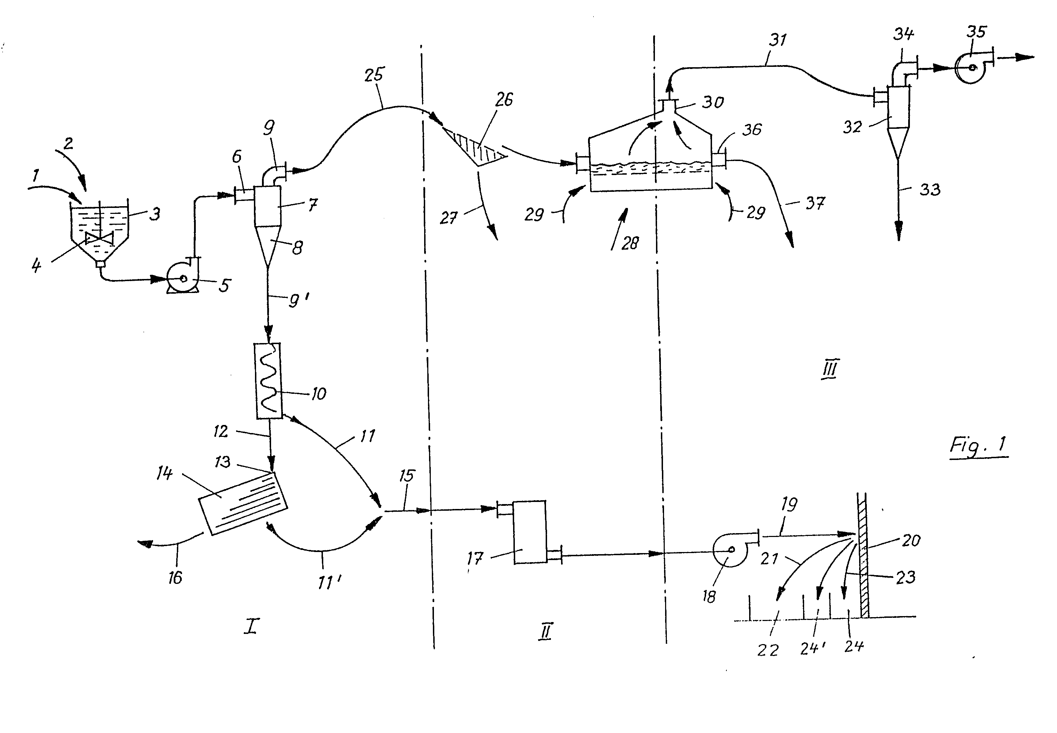

Wie es sich auch aus den weiteren Ausführungen ergibt, müssen nicht sämtliche Bestandteile des sogenannten Verfahrens-Stammbaumes gemäß Fig. 1 bei der Verwirklichung der Erfindung vorgesehen bzw. benutzt sein. So ist zwar für die Schichtströmung die Kombination des Wendelabscheiders und eines Schüttelherdes besonders effektiv
und damit auch hinsichtlich der Gestehungskosten am
wirtschaftlichsten. Man könnte aber auch den Wendelabscheider fortlassen und stattdessen einen entsprechend
größeren und damit aufwendigeren Schüttelherd vorsehen.
Ob und in welchem Umfang der Überlauf des Hydrozyklones,
d. h. die leichten Bestandteile der Zentrifugalsedimentation und auch die abgeschiedenen leichten Bestandteile der Schichtströmung weiter behandelt und ggfls.
separiert werden, hängt sowohl von dem zu verarbeitenden
Material (z. B. "Kabelschrott" oder "elektronischer Abfall") als auch von den jeweiligen sonstigen Bedingungen
des Einzelfalles und auch der wirtschaftlichen Entscheidung des Betreibers der Anlage ab.

In Fig. 1 sind drei Abschnitte I die nasse Aufbereitung,
II die Entwässerung und III die trockene Nachbehandlung
deklariert bzw. unterschieden. Nachstehend sei zunächst
der Abschnitt I mit der nassen Aufbereitung untersucht
und erst danach die Abschnitte II und III, in denen die
Behandlung des Überlaufes des Hydrozyklones einerseits
und die Behandlung der aus der Schichtströmung austretenden Leichtbestandteile andererseits je für sich zu
erörtern sein werden.

Der "Kabelschrott" oder der "elektronische Abfall" wird
ggfls. nach einer Vorsiebung gemäß Ziff. 1 zusammen mit
Wasser 2 einem Rührbehälter 3 mit Rührwerk 4 zugeführt.
Die aus Wasser und dem Schrott bzw. Abfall bestehende Suspension wird über eine Pumpe 5 dem Zulauf 6 eines Hydrozyklones 7 zugeführt. Die gröberen und schwereren Partikel aus dieser Suspension treten durch den Unterlauf 8 des Hydrozyklons aus, während die leichteren bzw. feineren Partikel, ggfls. auch solche mit einer sehr extremen Partikelform (Folien, Faserstoffe usw.) durch den Überlauf 9 des Hydrozyklons, der ggfls. 2-stufig sein kann, abgeschieden werden. Dabei können mit dem Schlammstrom des Zyklonunterlaufes auch noch Reste von Feinstoffen mitgerissen werden. Wenn auch hier noch nicht die Trennung im angestrebten Reinheitsgrad erfolgt, so stellt doch der Hydrozyklon (stattdessen könnte ggfls. auch eine Zentrifuge oder im Fall der Sedimentation ein Absetzbehälter vorgesehen sein) die Prozeßstufe dar, in der mengenmäßig die Haupttrennung stattfindet. In den beiden hauptsächlichen Anwendungsfällen erfolgen im Hydrozyklon die Anreicherungen wie folgt:

Bei der Verarbeitung von "Kabelschrott" enthält der Unterlauf Polyvinylchlorid, Gummi, bzw. Gummiersatzstoffe und Metall, während sich im Überlauf Polyolefine und Faserstoffe befinden. Im zweitgenannten Fall des "elektronischen Abfalls" befindet sich im Unterlauf eine angereicherte Wertmetall-Fraktion zusammen mit Staubresten und im Überlauf im wesentlichen nur Abfall von Staub bzw. Teilchen sehr kleiner Formgröße. Im letztgenannten Fall empfiehlt sich der Einsatz von Hydrozyklonen mit flachem Boden.

Der Schweranteil dieser bevorzugten Zentrifugalsedimentation, in diesem Ausführungsbeispiel also der Unterlauf 8 des Hydrozyklones 7, wird gemäß Ziff. 9 der zweiten Prozeßstufe, nämlich der Schichtströmung zugeführt. Sie besteht in diesem Ausführungsbeispiel zunächst aus einem Wendelscheider 10

0156144

(auch Spiralscheider genannt), der von einer ruhenden Spirale bzw. einem ruhenden Wendel gebildet ist. Dem Wendelscheider wird nur ein volumenstrommäßig geringerer Anteil (im Vergleich zur ursprünglichen Aufgabe auf den Hydrozyklon) zugeführt. Diese vergleichsweise stark eingedickte Fraktion wird auf dem Wendelscheider im Schichtströmungsverfahren nachbehandelt. Infolge starker Reibung zwischen dem die Wand hinablaufenden Schlamm und der Wendelrinne reichern sich an deren Profil-Tiefstpunkt (innen) schwerere Stoffe an, während die im Zulauf mitgeführten leichteren Stoffe im Überstehenden aufschwimmen. Infolge der Fliehkraftwirkung entstehen nebeneinander laufende Bänder mit von innen nach außen abnehmender Wichte. Sie werden am unteren Ende der Wendel bzw. Spirale getrennt abgeführt. Dies sind im Fall der Verarbeitung von Kabelschrott die Metallteile, sowie Gummi und schwerere Kunststoffe. Gummi und schwerere Kunststoffe werden gemäß Ziff. 11 der Weiterverarbeitung in den Abschnitten II und III zugeführt, während die im Wendelscheider angereicherten Metallteile, d. h. das hiermit gewonnene Vorkonzentrat aus metallischen Bestandteilen gemäß Ziff. 12 dem Eingang 13 der im vorliegenden Ausführungsbeispiel dritten Prozeßstufe, nämlich einem Schüttelherd 14 zugeführt wird.

Bei Verarbeitung von "Elektronik-Abfall" kann die Wertmetall-Fraktion auf einem Wendelscheider 10 angereichert werden. Man kann aber in diesem Fall (je nach Voranreicherungsgrad im Hydrozyklon) die Unterlauffraktion des Hydrozyklons direkt dem Schüttelherd zuführen, d.h. auf einen Wendelscheider verzichten.

Der Schüttelherd 14 dient der endgültigen Reinigung der vorkonzentrierten Metallfraktion und zwar ebenfalls durch

0156144

Schichtströmung. Ein Schüttelherd hat eine Vielzahl von einander parallelen Rinnen, in denen sich das Gut befindet. Der Herd und damit die Rinnen werden in deren Längsrichtung hin und her bewegt (geschüttelt). Außerdem wird quer zu den Rinnen ein Wasserstrom darüber geleitet. Die leichteren Bestandteile werden dadurch vorweg abgeschieden, während die schwereren Bestandteile in den Rinnen zum unteren Ende des geneigten Schüttelherdes hin wandern.

Während also der Hydrozyklon die Trennung in leichte Bestandteile des Überlaufes und schwere und mittelschwere Bestandteile des Unterlaufes vornimmt, erfolgt im Wendelabscheider eine Abtrennung der mittelschweren Bestandteile und schließlich im Schüttelherd eine weitere Konzentrierung der schweren Metall-Bestandteile, d.h. Abtrennung noch vorhandener mittelschwerer Bestandteile. Falls kein Wendelscheider vorgesehen ist, so müssen dessen Aufgaben vom Schüttelherd mit übernommen werden. Der Ausgang des Schüttelherdes 14 teilt sich in weitere mittelschwere Bestandteile gemäß Ziff. 11', die sich mit den Bestandteilen 11 des Wendelabscheiders gemäß Ziff. 15 vereinigen. Dies kann eine Fraktion aus Gummi/ Schwerkunststoffmischungen oder in Einzelfällen eine reine Kunststoff-Fraktion, z.B. Polyvinylchlorid sein. Der andere Ausgang des Schüttelherdes ist die hochkonzentrierte schwere Metallfraktion 16.

Der mittelschwere Abfall 15 kann, falls erforderlich, im Bereich II durch eine der hierfür zur Verfügung stehenden Vorrichtungen 17 entwässert und ggfls. getrocknet werden (Bereich II). Stattdessen kann die Trocknung auch im

0156144

Bereich III erfolgen, z. B. durch einen Ventilator 18, der gemäß 19 das ggfls. thermisch vorbehandelte Gemisch aus Gummi bzw. gummielastischen Stoffen und schwereren Kunststoffen zur Separierung auf eine Prallwand 20 bläst. Je nach der bei Gummi bzw. gummielastischen Stoffen höheren und bei Kunststoffen geringeren Elastizität werden erstere gemäß Pfeil 21 in einen Behälter 22 und die letzteren gemäß Pfeilen 23 in einen Behälter 24 geschleudert und damit voneinander getrennt. Die erwähnte thermische Vorbehandlung kann hierbei so erfolgen, daß die Mischung auf eine Temperatur gebracht wird, in der die Kunststoffteile weicher, d.h. plastischer werden und dadurch noch mehr an Elastizität gegenüber Gummi bzw. gummielastischen Stoffen verlieren. Dies erleichtert bzw. verbessert die vorgenannte Fraktionierung. Hierdurch ist es möglich, Kunststoffe, in der Regel Polyvinylchloride, die nicht verbrannt werden dürfen, von dem verbrennbaren Gummi bzw. den verbrennbaren gummielastischen Stoffen zu trennen. Zwischen den Behältern 22, 24 kann auch ein weiterer in der Zeichnung mit dargestellter Behälter 24 zur Aufnahme einer Gemischtfraktion vorgesehen sein. Man kann nicht nur den Anströmwinkel der Wand 20, sondern auch den der Düse des Ventilators 18 und damit des Stromes 19 variieren.

Im Falle der Verarbeitung von sogenanntem "Kabelschrott" enthält der Überlauf des Hycrozyklons leichtere Kunststoff-Fraktionen, wie Polyolefine, z. B. Polyäthylen und auch Faserstoffe aller Art. Diese werden gemäß 25 einer Entwässerungsvorrichtung 2f zugeführt. Das abgehende Wasser 27 kann als Prozeßwasser rezirkulieren. Die Kunststoff-Fraktionen und Faserstoffe werden dann einem

Wirbelschichttrockner 28 zugeleitet, der sie bis auf max. 1 Gew. % Restfeuchte trocknet. Zugleich erfolgt durch gezielte Strömungsführung der Heißluft eine Sichtung des Mischgutes. Die Luftzufuhren sind mit 29 beziffert. Die die Faserstoffe enthaltenden Schwebstoffe werden mit der Sichtung bei 30 austreten und über die Leitung 31 einem Staubzyklon 32 zugeführt, stellen also dessen Zulauf dar. Aus dem Unterlauf dieses Staubzyklons treten die Faserstoffe 33 aus und aus dem Überlauf 34 Luft bzw. Gase, die durch einen Ventilator 35 abgeblasen werden. Die leichten Kunststoffe treten bei 36 aus dem Wirbelschichttrockner aus und werden gemäß 37 abgeleitet und einem nicht dargestellten Behälter zugeführt. Zur besseren Sichtung kann der Wirbelschichttrockner über seine Länge in einzelnen Abteilungen unterteilt sein, wobei die Luftzufuhr an der Eingangsseite stärker sein kann als an der Ausgangsseite, da an der Eingangsseite das Gut noch etwas feuchter ist als an der Ausgangsseite.

Die bei 37 gewonnenen leichten Kunststoffe (z. B. Polyolefine) können zur Herstellung von Spritzgußteilen wieder verwendet werden. Die bei 33 austretenden Faserstoffe können beliebig verwendet werden.

Im Fall der Verarbeitung von "Elektronik-Abfall" ist in der Regel die leichte Abscheidung bei der Zentrifugalsedimentation, d.h. im vorliegenden Ausführungsbeispiel die am Überlauf 9 des Hydrozyklons austretende Masse bereits nicht weiter verwertbarer Abfall. Ggfls. erfolgt noch eine Entwässerung, während eine Trockensichtung nicht mehr sinnvoll ist. In diesem Fall ist das allein interessierende Resultat die Erzielung der Metallkonzentration gemäß Ziff. 16.

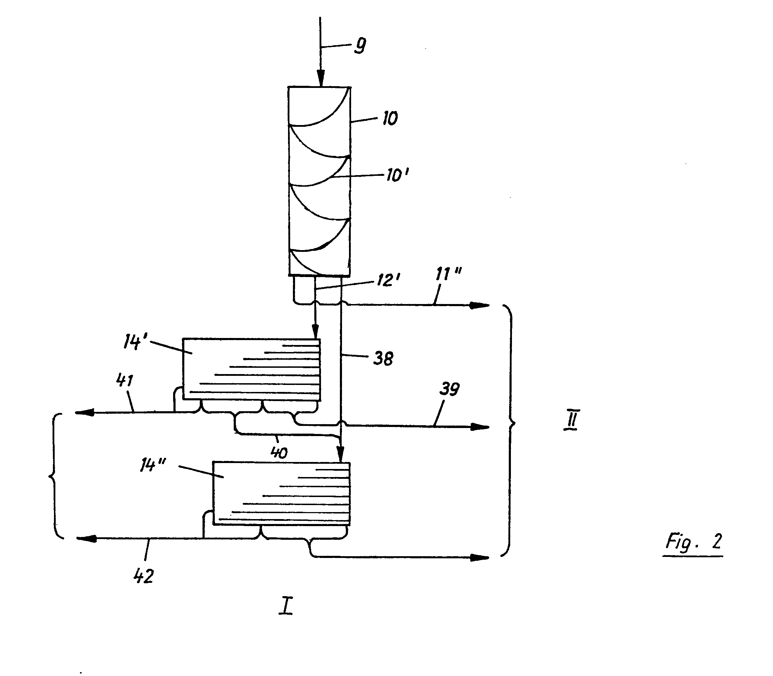

Fig. 2 zeigt die bereits erwähnte Ausführungsmöglichkeit der Erfindung eines zweistufigen Schüttelherdes. Die leichteren aus dem Wendelscheider 10 austretenden Teile gehen gemäß Ziff. 11" direkt dem Abschnitt II zu. Die mittelschweren Teile, zu denen auch Metallteile gehören, werden gemäß Ziff. 12' der ersten Stufe 14' des Schüttelherdes zugeführt, während die noch schwereren Bestandteile des Wendelscheiderausganges gemäß Ziff. 38 unter Umgehung der ersten Stufe 14' der zweiten Schüttelherdstufe 14" zugeführt werden. Die erste Stufe hat ausgangsseitig eine Zufuhr 39 der leichteren abgeschiedenen Stoffe in den Abschnitt II und eine Zufuhr 40 der mittelschweren Stoffe zum Eingang der zweiten Schüttelherdstufe 14", während die schweren und damit hochkonzentrierten metallischen Ausgangsstoffe der ersten Schüttelherdstufe 14' bei 41 abgeleitet werden. 42 ist die Ableitung der ebenfalls schweren und damit hochkonzentrierten metallischen Ausgangsstoffe der zweiten Schüttelherdstufe 14". 41 und 42 sind also die angestrebte hochkonzentrierte Metall-Fraktion.

Mit dem Verfahren und der Anordnung nach der Erfindung wird also sowohl das sehr komplexe Problem der Rückgewinnung von "Kabelschrott" als auch das der Wertmetallgewinnung aus "elektronischem Abfall", insbesondere den hierbei anfallenden Filterstäuben gelöst. Die unter-

schiedlichen Arbeitsweisen der erläuterten Prozeßstufen ermöglichen es, die verschiedensten Abfallstoffe voneinander zu trennen, die sich einerseits durch die Partikelgröße und Dichte des Partikelmaterials und andererseits durch die Form der Partikel (z. B. zylindrische Kupferstückchen, röhrchenartige Kunststoffumhüllungen, sowie faserartige Beimischungen) unterscheiden. Die erläuterten und dargestellten Prozeßstufen können insgesamt oder - wie bereits dargelegt - nur zum Teil zum Einsatz kommen. Durch auf das Produkt und die jeweiligen Bedingungen abgestimmte Kombinationen kommt man jeweils zum gewünschten Resultat. Die erläuterte Kombination von Wendelscheidern mit Schüttelherden (einstufig oder zweistufig) erweist sich als äußerst wirtschaftlich, da bei der Abfallaufbereitung von "Kabelschrott" ohne Wendelscheider mindestens die doppelte Anzahl Schüttelherde notwendig wäre, um die Einzelfraktionen, insbesondere die Metall-Fraktion in gleicher Reinheit auszubringen. Die Erfindung wäre auch bei anderen Anwendungsmöglichkeiten als vorstehend erläutert einsetzbar, bei denen sich gleiche oder ähnliche Problemstellungen ergeben.

- Ansprüche -

0156144

*- 15 -*

Patentansprüche:

1. Verfahren zur Trennung der metallischen Anteile von den nichtmetallischen Anteilen und gegebenenfalls auch der unterschiedlichen nichtmetallischen Anteile voneinander eines Gemenges, insbesondere eines Gemenges bei der Abfallverarbeitung von elektrischen Kabeln und von elektrischen und elektronischen Bauelementen, Geräten und dergleichen, dadurch gekennzeichnet, daß das Gemenge, insbesondere als Abfall angefallener sogenannter "Kabelschrott" oder sogenannter "elektronischer Abfall" zunächst zur Vorfraktionierung einer Sedimentation oder Zentrifugalsedimentation mit einem unter anderem metallische Teile enthaltenden schweren Austrag bzw. Unterlauf und einem nichtmetallischen leichten Austrag bzw. Überlauf unterzogen wird und daß danach der schwere Austrag der Sedimentation oder Zentrifugalsedimentation mittels eines Schichtströmungsverfahrens weiter fraktioniert wird und zwar in eine schwere metallische Fraktion und in eine leichte nichtmetallische Fraktion.

2. Verfahren nach Anspruch 1, dadurch gekennzeichnet, daß das Gemenge (1) mit Wasser (2) vermischt und einem Absetzbehälter oder einer Zentrifuge oder einem Hydrozyklon (7) zugeführt wird und daß der Schweraustrag, z. B. der nasse bzw. feuchte Unterlauf (6) des Hydrozyklons, dem Schichtströmungsverfahren unterzogen wird.

3. Verfahren nach Anspruch 1 oder 2, dadurch gekennzeichnet, daß der leichte Austrag der Sedimentation bzw. Zentrifugalsedimentation bzw. der Überlauf (9) des Hydrozyklons (7) einem Trocknungsprozeß mit anschließender oder kombinierter Luftsichtung (28) zugeführt wird.

4. Verfahren nach einem der Ansprüche 1 bis 3, dadurch gekennzeichnet, daß mehrere Schichtströmungsverfahrensabschnitte hintereinander vorgesehen sind.

5. Verfahren nach einem der Ansprüche 1 bis 4, dadurch gekennzeichnet, daß die leichte, nichtmetallische, aus schwereren Kunststoffen z. B. Polyvinylchlorid, und Gummi oder Gummiersatzstoffen bestehende Fraktion des schweren Austrages mittels des Schichtströmungsverfahrens in beide Bestandteile getrennt wird.

6. Verfahren nach einem der Ansprüche 1 bis 4, dadurch gekennzeichnet, daß die Trennung der schwereren Kunststoffteilchen von den Gummiteilchen, bzw. gummielastischer Teilchen nach einer thermischen Vorbehandlung dieser Teilchen mittels Prallscheidung entsprechend der unterschiedlichen Elastizität der jeweiligen Teilchenart erfolgt.

7. Anordnung zur Durchführung des Verfahrens nach einem der Ansprüche 1 bis 6, dadurch gekennzeichnet, daß ein Rührbehälter (Dispergator) (3) mit Wasserzufuhr (2) und Rührwerk (4), sowie Zugabemöglichkeit (1) des Gemenges vorgesehen ist und daß der Ausgang dieses Rührbehälters, bevorzugt über eine Pumpe (5), mit dem Zulauf (6) einer der Zentrifugalsedimentation dienenden Hydrozyklonstufe (7) verbunden ist, der ein- oder zweistufig sein kann, und daß eine Verbindung des Unterlaufes der Hydrozyklonstufe zum Eingang einer Schichtströmungsstufe vorgesehen ist.

8. Anordnung nach Anspruch 7, dadurch gekennzeichnet, daß als Schichtströmungsstufe ein Schüttelherd (14) dient.

9. Anordnung nach Anspruch 7 und 8, dadurch gekennzeichnet, daß zwischen dem Unterlauf (8) der Hydrozyklonstufe (7) und dem Eingang des Schüttelherdes (14) als weiteres der Schichtströmungsbehandlung des schweren Hydrozyklonausganges dienendes Mittel der Schichtströmungsstufe ein Wendelscheider (10) vorgesehen ist.

10. Anordnung nach Anspruch 8 oder 9, dadurch gekennzeichnet, daß der Schüttelherd aus zwei Schüttelherdstufen (14', 14") besteht, wobei der mittelschwere Austrag (40) in Richtung des Gutverlaufes der ersten Stufe (14') mit dem Eingang der zweiten Stufe (14") verbunden ist.

11. Anordnung nach den Ansprüchen 9 und 10, gekennzeichnet durch eine Verbindung (12') vom mittelschweren Ausgang des Wendelscheiders (10) zum Eingang der ersten Schüttelherdstufe (14') und durch eine Verbindung

(38) vom schweren Ausgang des Wendelscheiders zum Eingang der zweiten Schüttelherdstufe (14") und ferner durch eine Verbindung (11") des leichten Ausganges des Wendelscheiders zum Entwässerungsbereich (II).

12. Anordnung nach einem der Ansprüche 7 bis 11, gekennzeichnet durch eine Entwässerungsvorrichtung (17) für den Leichtausgang der Anordnungen (14, bzw. 14' und 14", bzw. 10) der Schichtströmung.

13. Anordnung nach einem der Ansprüche 7 bis 12, dadurch gekennzeichnet, daß im Bereich (III) der trockenen Nachbehandlung eine Vorrichtung zum Separieren der unterschiedlichen Teilchen des entwässerten Leichtausganges der Schichtströmung vorgesehen ist.

14. Anordnung nach Anspruch 13, gekennzeichnet durch einen Prallabscheider mit einem das Teilchengemisch unter Druck ausstoßenden Ventilator (18) bzw. einer entsprechenden Düse und einer im verstellbaren Winkel zum Ausströmstrahl (19) liegenden Prallwand (20) sowie tiefer als die Prallwand gelegenen Auffangbehälter (22, 24, 24') für die verschiedenen Teilchensorten, wobei entsprechend der unterschiedlichen Elastizität und damit dem unterschiedlichen Rückprall der Teilchen sich die Behälter im unterschiedlichen Abstand von der Prallwand (20) befinden.

15. Anordnung nach einem der Ansprüche 7 bis 14, dadurch gekennzeichnet, daß der Leichtausgang der Sedimentation oder der Zentrifugalsedimentation, insbesondere der Überlauf (9) des Hydrozyklons (7) zu einem Wirbelschichttrockner und -sichter (28) führt, der einen

0156144

Ausgang für leichte Faserstoffe und einen weiteren
Ausgang für demgegenüber etwas schwerere Kunststoffe
aufweist.

16. Anordnung nach Anspruch 15, dadurch gekennzeichnet,
daß zur Trennung der Faserstoffe (33) von der Luft
(34) ein Luftzyklon (32) vorgesehen ist.

0156144

Fig. 1

0156144

*Fig. 2*